Europäisches Patentamt

European Patent Office

Office européen des brevets

(19)

(11) Numéro de publication: **0 088 709**
**A1**

# (12) DEMANDE DE BREVET EUROPEEN

(21) Numéro de dépôt: **83430009.7**

(22) Date de dépôt: **02.03.83**

(51) Int. Cl.³: **B 60 R 25/10**

(30) Priorité: **05.03.82 FR 8203879**

(43) Date de publication de la demande: **14.09.83**
**Bulletin 83/37**

(84) Etats contractants désignés: **AT BE CH DE GB IT LI NL SE**

(71) Demandeur: **Rahem, Jean Claude, Les Hesperides A4 Boulevard des Alpes, F-13012 Marseille (FR)**

(72) Inventeur: **Rahem, Jean Claude, Les Hesperides A4 Boulevard des Alpes, F-13012 Marseille (FR)**

(74) Mandataire: **Roman, Alphonse, 35 Rue Paradis, F-13001 Marseille (FR)**

(54) **Dispositif d'alarme fumigène combiné avec une préalarme pour la protection des véhicules et autres.**

(57) L'objet de l'invention concerne un dispositif d'alarme fumigène combiné avec une préalarme pour la protection des véhicules et autres.

Il est constitué par le branchement sur le circuit d'alarme sonore ou visuelle (2, 3) d'un élément retardateur (6) assurant en un temps différé la mise à feu de la bombe fumigène.

Il est destiné à permettre une double protection à intervalles chronologiques réglables consistant en un signal sonore ou visuel suivi d'une émission gazeuse agressive.

- 1 -

<u>Dispositif d'alarme fumigène combiné avec une préalarme pour la protection des véhicules et autres</u>

L'objet de l'invention concerne un dispositif d'alarme fumigène combiné avec une préalarme pour la
protection des véhicules et autres.

Il est destiné à permettre une double protection à
intervalles chronologiques réglables consistant en
un signal sonore ou visuel suivi d'une émission
gazeuse agressive.

Il est connu d'utiliser pour la protection des
véhicules des dispositifs d'alarmes sonores et même
des émetteurs gazeux neutres ou activés, mais ces
signalisations étaient le plus souvent simultanés
d'où leur manque d'éfficacité. De plus ces dispositifs étaient destinés à l'intérieur du véhicule et
ne permettaient pas de repérer immédiatement dans
un parc à autos où de nombreux véhicules stationnent celui qui a subi l'agression.

Le dispositif suivant l'invention supprime ces inconvénients et permet en un premier temps, une
émission sonore voire visuelle par l'éclairage d'une lampe et en un temps différé, lorsque par exemple une personne a pénétré dans le véhicule ou cassé une vitre, une émission fumigène très importante obligeant l'auteur à s'éloigner et signalant de loin le véhicule visité. Ce temps différé permettant à l'usager du véhicule de mettre hors circuit la seconde alarme.

Il est constitué par le branchement sur le circuit d'alarme sonore ou visuelle d'un élément retardateur assurant en un temps différé la mise à feu de la bombe fumigène.

Sur les dessins annexés, donnés à titre d'exemple non limitatif d'une des formes de réalisation de l'objet de l'invention :

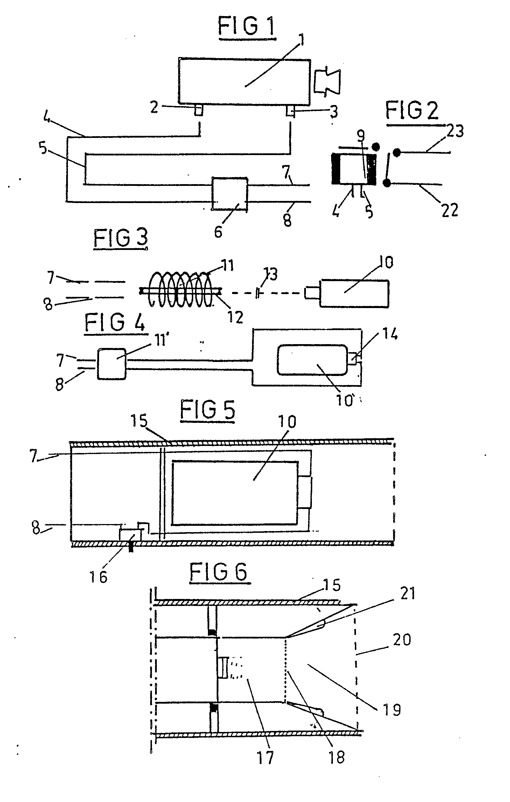

La figure 1 représente un mode de montage des circuits d'alarme ; la figure 2 montre l'inter position éventuelle d'un relais ; les figures 3, 4 représentent des moyens de mise à feu ou ouverture de bombes fumigènes ; les figures 5, 6 sont des vues en coupe et en élévation d'un mode constructif de porte fusée ou bombe fumigène.

L'alarme sonore ou visuelle 1 est reliée au circuit habituel d'arrivée de courant 2 et de mise à la terre 3. Le circuit en dérivation 4, 5 comportant un élément retardateur 6 tel un bi-lame ou autre,

- 3 -

est relié par ses circuits 7, 8 à la fusée ou bombe fumigène.

Il est possible suivant les résultats recherchés d'utiliser des relais simples 9, mais pouvant être polarisés ou différentiels.

Lorsque la bombe 10 a une ouverture à traction mécanique on interpose un électro aimant 11 dont le noyau mobile 12 tractera le récepteur 13, Fig 3.

Par contre, si la mise à feu est pyrométrique, électrique ou chimique 14, une électro-vanne 11' assure l'ouverture ou la fermeture du circuit.

La fusée 10, figure 5 est enfermée dans un carter résistant 15 muni d'un interrupteur coupe circuit qui permet de n'utiliser si on le désire que l'alarme sonore 1.

L'émission gazeuse fumigène est obtenue par une bombe utilisée par exemple pour le contrôle des cheminées où 100 $M^3$ de fumée peuvent facilement être dégagées.

Ces bombes peuvent être à la fois fumigènes, seulement asphyxiantes, mais inoffensives ou contenir un gaz agressif lacrymogène ou autre.

L'émission s'effectue dans un conduit 17 muni d'un filtre 18 arrêtant les projections.

- 4 -

Un secteur déflecteur et accélérateur 19 en forme évasée permet l'expansion des fumées et leur émission à travers les orifices du diffuseur 20 ayant le diamètre du carter 15. Des profils accélérateurs 21 peuvent être prévus.

L'usager ferme le circuit d'alerte par l'interrupteur alimentant le contacteur relié à l'alarme 1 qui se déclanche d'abord quelques secondes plus tard, le temps peut être d'une minute, l'émetteur fumigène est déclanché.

Ce décalage chronologique permet d'éviter l'émission dans le cas où le propriétaire du véhicule oublierait de mettre hors circuit l'alarme sonore en pénétrant dans le véhicule.
Il est également possible de relier les lignes 4, 5 à un relais 9 dans le cas où on arracherait l'émetteur sonore et où la ligne 4, 5 serait coupée, les lignes 23, 22 seront alors alimentées par le courant batteries en ce cas encore, un retardateur peut être prévu. La mise hors circuit de bombe étant alors obtenue par l'interrupteur 16.

En tout état de cause, la combinaison des deux alarmes en temps différé augmente l'efficacité de la protection.

Toutefois les formes, dimensions et dispositions des différents éléments pourront varier dans la limite des équivalents comme d'ailleurs les matières utili

0088709

-5 -

sées pour leur fabrication sans changer pour cela
la conception générale de l'invention qui vient
d'être décrite.

- 1 -

Revendications de brevet

1. Dispositif d'alarme fumigène avec une préalarme pour la protection des véhicules permettant d'obtenir une double protection à intervalles chronologiques réglables mais pouvant également fonctionner indépendamment, se caractérisant par le raccordement à l'alarme sonore ou visuelle (1) par lignes (4, 5) à l'émetteur fumigène (10) avec un élément retardateur interposé (6) tel un bi-lame ou similaire.

2. Dispositif suivant la revendication 1 se caractérisant par le fait que les lignes (7, 8) connectées à l'élément retardateur sont reliées à un électroaimant (11) dont le noyau mobile (12) tracte la pièce réceptrice pour les bombes fumigènes déclanchées par traction.

3. Dispositif suivant la revendication 1 se caractérisant par le fait que les lignes (7, 8) à la sortie du temporisateur (6) sont reliées à une électro-vanne ouvrant ou fermant un circuit alimentant la mise à feu (14) s'il s'agit d'un détonateur pyrométrique ou chimique ou électrique.

4. Dispositif suivant la revendication 1 se caractérisant par le fait que durant les applications un relais (9) simple polarisé ou différentiel peut être interposé pour alimenter les lignes (21, 22) par un autre circuit que celui relié à l'alarme sonore.

- 2 -

5. Dispositif suivant la revendication 1 se caractérisant par le fait que la bombe fumigène (10) est positionnée dans un carter résistant (15) avec interrupteur (16) conduit (17) au filtre (18) et déflecteur (19) comportant des accélérateurs aérodynamiques (21) et diffuseur (20).

FIG 1

FIG 2

FIG 3

FIG 4

FIG 5

FIG 6

0088709

Office européen
des brevets

## RAPPORT DE RECHERCHE EUROPEENNE

Numéro de la demande

EP 83 43 0009

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. 3) |
| X | BE-A- 759 607 (DEGUELDRE) <br> * En entier * <br><br> --- | 1-5 | B 60 R 25/10 |
| X | DE-A-2 347 032 (MULZER) <br> * En entier * <br><br> --- | 1,5 | |
| X | DE-A-2 749 034 (LANDSRATH) <br> * En entier * <br><br> --- | 1-5 | |
| A | FR-A- 738 345 (HEMPEL) <br> * En entier * <br><br> ----- | 1 | |
| | | | DOMAINES TECHNIQUES RECHERCHES (Int. Cl. 3) <br><br> B 60 R |
| | Le présent rapport de recherche a été établi pour toutes les revendications | | |

| Lieu de la recherche | Date d'achèvement de la recherche | Examinateur |
|---|---|---|
| LA HAYE | 15-06-1983 | HEROUAN E. |